# EUROPÄISCHE PATENTANMELDUNG

(11) **EP 0 964 181 A2**
(43) Veröffentlichungstag der Anmeldung: **15.12.1999**
(21) Anmeldenummer: 99110824.2
(22) Anmeldetag: 05.06.1999
(51) Int. Cl.: F16F 15/00

(54) **Verfahren und Vorrichtung zur Beeinflussung von Schwingungen, die von einem zumindest mittelbar motorisch angetriebenen Fahrzeug ausgehen**

(30) Priorität: 13.06.1998 DE 19826177
(71) Anmelder: DaimlerChrysler AG, 70567 Stuttgart (DE)
(72) Erfinder: Schnur, Jürgen, 71254 Ditzingen (DE); Tomaschko, Silvia Dr., 89075 Ulm (DE)

(57) **Zusammenfassung**

Die Erfindung betrifft ein Verfahren und eine Vorrichtung zur Beeinflussung von wahrnehmbaren Schwingungen, die von einem zumindest mittelbar motorisch angetriebenen Fahrzeug ausgehen, insbesondere von einer im Fahrgastraum wahrnehmbaren Geräuschkulisse. Im Bereich eines Übergangs zweier sich zumindest mittelbar und wenigstens bereichsweise berührender, insbesondere überlappender Bauteile ist zumindest ein in seiner Geometrie steuerbar veränderbarer und zu Schwingungen erregbarer Disstanzkörper, insbesondere ein Piezoelement angeordnet. Über den Anlagebereich der beiden Bauteile aneinander werden zwischen dem ersten Bauteil und dem zweiten Bauteil Schwingungen übertragen. Das Piezoelement wird zu einer Sekundär-Schwingung angeregt, die mit der übertragenen Schwingung interferiert wird, wodurch die Gesamtenergie und/oder die Zusammensetzung der Frequenzen der übertragenen Schwingungen verändert wird.

## Beschreibung

Die Erfindung betrifft ein Verfahren zur Beeinflussung von Schwingungen, die von einem zumindest mittelbar motorisch angetriebenen Fahrzeug ausgehen, insbesondere von einer im Fahrgastraum wahrnehmbaren Geräuschkulisse, gemäß den Oberbegriffen der Ansprüche 1 bzw. 20, wie sie insbesondere im Automobil auftreten und hier als bekannt unterstellt werden.

Um die von einem Fahrzeug ausgehende Schwingungen und insbesondere im Fahrgastraum wahrnehmbare Geräuschkulisse zu verändern, werden vielerlei Maßnahmen ergriffen. Insbesondere sind hierbei die Anwendung verschiedener Dämmaterilien in Form von Dämmatten und dergleichen sowie nachfolgend beschrieben akustische Maßnahmen zu nennen.

So ist z.B. aus der US 5,332,061 A1 ein Verfahren zur Unterdrückung von in die Karosserie eingeleiteten Vibrationen und ein entsprechendes Fahrzeug bekannt. Die betreffenden eingeleiteten Vibrationen stammen vom Motor und werden an den Verbindungspunkten des Motors mit der Karosserie übertragen. Zu Dämpfung dieser Vibrationen weist das Fahrzeug Shaker, also mechanische Schwingungserreger auf, die im Bereich von zumindest einigen Verbindungspunkten des Motors mit der Karosserie angeordnet sind. Beim Betreiben des Motors werden die Shaker in Abhängigkeit von der Motorendrehzahl bei den Resonsanzfrequenzen gegenphasig zu den vom Motor kommenden Vibrationen erregt, wodürch die Übertragung der eingeleiteten Vibrationen zumindest gedämpft werden. Die entsprechenden Frequenzen und deren Amplituden für die Sekundär-Schwingungen werden hierbei einem zuvor niedergelegten Datenfeld entnommen.

Aus der US 5,434,783 A1 ist ein Fahrzeug bekannt, bei dem die innerhalb einer Fahrgastzelle hörbare Geräuschkulisse durch Schallwellen beeinflußt wird. Neben normalen Lautsprechern wird hier auch ein Piezoelement verwendet, daß die Karosserie zumindest bereichsweise zu Schwingungen anregt und dadurch zur Aussendung von Schallwellen beeinflußt; d.h. das Piezoelement wirkt wie die Spule eines Lautsprechers, während die Karosserie die schwingende Membran darstellt. Mit dem vorbekannten Verfahren und der vorbekannten Vorrichtung wird eine Verbesserung des subjektiven Empfindens innerhalb der Fahrgastzelle erreicht.

Eine weiterführend Ausbildung der obigen Entwicklung zur Beeinflussung des subjektiv wahrgenommenen Fahreindrucks ist aus der DE 195 31 402 A1 bekannt. Gemäß dieser Schrift wird in Abhängigkeit eines Parameters und hierbei insbesondere der Motordrehzahl und/oder der Geschwindigkeit nicht nur der Luftschall, sondern auch der mit dem Körper wahrgenommenen Körperschall bzw. Vibrationen beeinflußt. Hierzu wird je nach Größe des Parameters aus einem Datenfeld bestimmte Daten ausgelesen und unter Zuhilfenahme von Schwingungserregern in u.a. auch körperwahrnehmbaren Sekundär-Schwingungen umgesetzt. Durch diese Maßnahmen können in Verbindung mit der Beeinflussung des akustisch wahrgenommenen Luftschalls sowohl positive als auch negative Interferenzen der künstlichen Sekundär-Schwingungen mit den beim Betreiben des Fahrzeuges fahrzeugseitig sich bildenden Primär-Schwingungen erzeugt werden. Die Interferenzen können je nach Wunsch den wahrgenommenen Eindruck verringern oder aber einen bestimmten Eindruck, bspw. ein Schalten bei mit einem stufenlosen Getriebe versehenen Fahrzeug, vortäuschen.

Die oben genannten Maßnahmen sind jedoch recht aufwendig. Desweiteren erfordern sie immer noch die Verwendung von gewichtserhöhenden Dämmatten aus einem Dämmaterial.

Die Aufgabe der Erfindung ist es, ein Verfahren und eine Vorrichtung zu entwickeln, mit dem/der auf eine neuartige Weise eine Beeinflussung von Geräuschen vorgenommen werden kann, die von Gegenständen kommen, die mindestens zwei zumindest mittelbar aneinander anliegende und miteinander verbundene Bauteile aufweisen.

Die Aufgabe wird erfindungsagemäß mit einem Verfahren mit den Verfahrensschritten des Anspruchs 1 bzw. mit einer Vorrichtung mit den Merkmalen des Anspruchs 12 gelöst. Durch die Anordnung von Distanzkörpern, vorzugsweise in aktiven Dichtungen angeordnete Piezoelemente, die zumindest bereichsweise in ihrer Geometrie gesteuert beeinflußbar sind, kann auf einfache Weise die Übertragungsfunktion für Schwingungen zwischen den einzelnen Bauteilen des Gegenstandes verändert werden. In vorteilhafter Ausgestaltung können die Distanzkörper zu Sekundär-Schwingungen erregt werden, die mit den übertragenen und zu vorzugsweise Störgeräuschen führenden Schwingungen interferiert werden können, wodurch vorzugsweise der störende Anteil der wahrnehmbaren Geräuschkulisse zumindest vermindert werden kann.

Von besonderem Vorteil ist dies bei massiveren Bauteilen, wie einer Ölwanne, einem Motorblock, einer Welle und dgl. insbesondere im ebenfalls beanspruchten erfinderischen Zusammenhang mit den unterschiedlichen akustischen Impedanzen der betreffenden Bauteile, da hier dann das eine, akustisch harte Bauteil als Stützkörper für das zweite, akustisch weichere Bauteil wirkt; d.h. das harte Bauteil bilden sozusagen einen virtuellen Fixpunkt für das akustisch weichere und damit leicht und energiearm zu Schwingungen erregbare Bauteil. Besonders günstig wird dies bei einem Impedanzverhältnis der beiden Bauteile zueinander, das kleiner als 1: 2, bevorzugt kleiner als 1: 5 und besonders bevorzugt kleiner als 1 : 10 ist.

Zweckmäßigerweise werden die Distanzkörper zusätzlich noch im Bereich hoher Modendichten des Körperschalls, insbesondere in einem ein Stoß oder in einem Flansch oder in einer Trennfuge zwischen Bauteilen angeordnet.

Die Erfindung kann insbesondere zur Geräuschverringerung innerhalb eines umschlossenen Raumes verwendet werden. In der gleichen Weise ist es auch möglich, die nach außen übertragenen Geräusche bevorzugt minimierend zu beeinflussen.

Besonderen Vorteil bietet die Erfindung bei der Konstruktion und/oder der insbesondere randseitigen Befestigungen von Paneelen, von Verschalungsplatten, von Fensterscheiben, von Verkleidungsteilen, insbesondere von Karosserieblechen eines Kraftfahrzeuges oder eines Flugzeuges. Desweiteren gilt dies auch für die Konstruktion und Befestigung bspw. einer Ölwanne, einem Kurbelgehäuse, eines Zylinderblocks eines Motors, einem Motorträger eines Motors oder eines Motorlagers eines Motorträgers, da mit der Erfindung zumindest zum Teil auf komplizierte und die akustische Impedanz erhöhende und versteifende Ausrippungen von Bauteilen und damit auf Masse verzichtet werden.

Insgesamt sind damit u.a Kosteneinsparung verbunden, die auf eine Vereinfachung der Anforderung an Konstruktion, auf vereinfachte Bauteilgeometrien und damit Kosteneinsparung beim Gießen usw., sowie auf eine mögliche Verringerung der schalldämmenden Maßnahmen wie Dämmatten und dgl. zurückzuführen sind.

Weitere sinnvolle Ausgestaltungen der Erfindung sind den jeweiligen Unteransprüchen entnehmbar. Im übrigen wird die Erfindung anhand von in den Zeichnungen dargestellten Ausführungsbeispielen näher erläutert. Dabei zeigt
- Fig. 1: eine Aufsicht auf ein erstes Bauteil, das von einem zweiten Bauteil beidseitig rahmenartig umfaßt ist,
- Fig. 2: einen Schnitt durch eine aktive Dichtung mit statistisch darin angeordneten Piezoelementen und zugehörigen elektrischen Kontakten,
- Fig. 3: einen Schnitt durch eine aktive Dichtung mit orientiert darin angeordneten Piezoelementen sowie zugehörigen elektrischen Kontakten,
- Fig. 4: einen Schnitt und eine entsprechende Ausschnittsvergrößerung durch eine aktive Dichtung mit orientiert darin angeordneten Piezoelementen, piezoelektrischen Sensoren sowie zugehörigen elektrischen Kontakten,
- Fig. 5: einen quer zur Fläche des ersten Bauteils geführten Schnitt durch eine Anordnung gemäß Figur 1 mit einer aktiven und einer passiven Dichtung,
- Fig. 6: einen quer zur Fläche des ersten Bauteils geführten Schnitt durch eine Anordnung gemäß Figur 1 mit aktiven Dichtungen sowie zusätzlichen Sensoren,
- Fig. 7: eine Aufsicht auf einen Gegenstand, bei dem ein erstes Bauteil mit einem zweiten Bauteil überlappend verbunden ist,
- Fig. 8: einen quer zur Fläche des ersten Bauteils geführten Schnitt durch eine Anordnung gemäß Figur 7 mit einer aktiven Dichtung,
- Fig. 9: einen Schnitt entsprechend Figur 7, wobei die Anordnung im Überlappungs- und Stoßbereich jeweils eine aktive Dichtung und zusätzlich Sensoren aufweist,
- Fig. 10: eine schematische Darstellung einer Frontansicht eines Motors mit Getriebe und möglichen Positionen zur Anordnung von aktiven Dichtungen,
- Fig. 11: eine Seitensansicht gemäß Figur 10,
- Fig. 12: eine aktive Dichtung im Stoßbereich zwischen Zylinderkopf und Motorblock,
- Fig. 13: eine aktive Dichtung zwischen Kurbelgehäuse und Ölwanne und
- Fig. 14: ein Diagramm eines von einer Ölwanne ausgehenden Luftschallpegels mit und ohne erfindungsgemäße Beeinflussung.

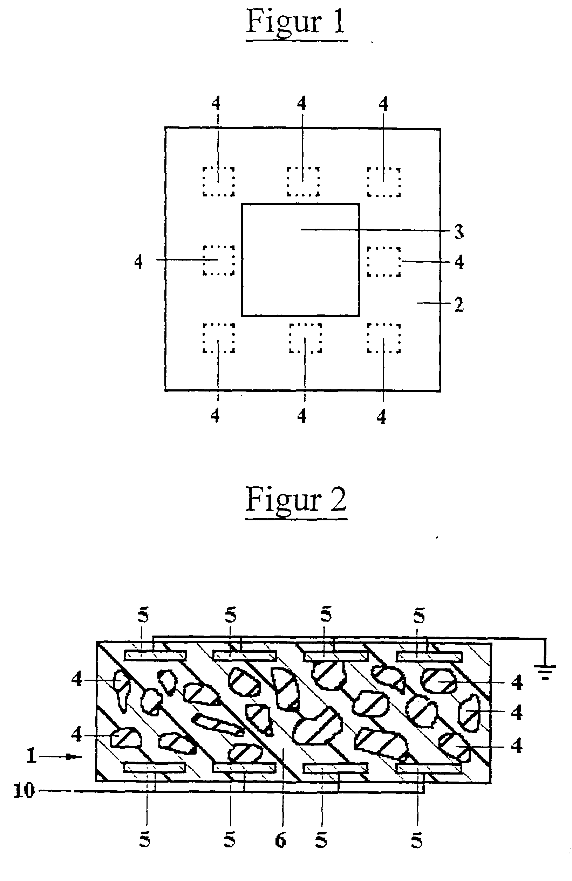

In Figur 1 ist ein Ausschnitt eines Gegenstandes dargestellt, der ein erstes plattenartiges Bauteil 3 aufweist, das von einem zweiten Bauteil 3 beidseitig in der Art eines Rahmens umfaßt ist. Im Übergangsbereich zwischen den beiden Bauteilen 2 und 3 ist auf beiden Flachseiten des ersten Bauteils 3 eine Dichtung angeordnet. Bei einem derartigen Gegenstand kann es sich bspw. um ein Fenster handeln, dessen Fensterscheibe (erstes Bauteil 3) in einem Fensterrahmen (zweites Bauteil 2) gefaßt ist.

An den Flachseiten des ersten Bauteils 3 sind randseitig und zwar im Bereich des Übergangs zwischen dem zweiten Bauteil 2 und dem ersten Bauteil 3 als Distanzkörper ein Schwingungserreger angeordnet. Bei den Schwingungserregern handelt es sich zweckmäßigerweise um Piezoelemente 4, die im vorliegenden Fall getrennt und unabhängig voneinander angeordnet sind und die zumindest mittelbar an dem zweiten Bauteil 2 und dem ersten Bauteil 3 anliegen. Die Piezoelemente 4 sind bevorzugt an Orten angeordnet, an denen aufgrund einer übertragenen Schwingung ein hoher Kraftfluß und/oder eine große Amplitude bzw. eine hoher Modendichte der übertragenen Schwingung zu erwarten ist.

Die Piezoelemente können - je nach Vorteile im jeweiligen Einsatzfall - bspw. massiv sein und/oder aus mehreren aufeinander gelegten Schichten einzelner Lagen von insbesondere folien- und/oder scheibenartigen Piezokeramiken gebildet sind. Gegenüber der massiven Bauweise von Piezoelementen verringert sich bei den Multi-layer-Systemen bei gleicher Beanspruchung und gleicher aktiver Fläche - die Spannung, während sich die Strom erhöht.

Die in der Figur 1 dargestellte Anordnung bildet eine Vorrichtung zur Beeinflussung von Geräuschen, die auf die beiden Bauteile 2 und/oder 3 zurückzuführen sind. Bei diesen Geräuschen kann es sich bspw. um Windgeräusche handeln, die über das plattenförmige erste Bauteil 3 als Schwingungen übertragen werden. Ferner können es auch Schwingungen sein, die über das rahmenartige zweite Bauteil 2 übertragen werden und das erste Bauteil 3 zu Schwingungen, die u.a. als Geräusch wahrnehmbar sind, erregen. Vor allem bei Kraftfahrzeugen wie Flugzeugen, Bahnen und Bussen sowie insbesondere bei Lastkraft- und/oder Personenkraftwagen sind diese Geräusche für die im Innenraum wahrnehmbare Geräuschkulisse von besonderem Interesse. Gleiches gilt für die Schallabstrahlung nach außen.

Anstelle der aus Figur 1 bekannten Anordnung können die Piezoelemente 4 zweckmäßigerweise auch in eine zumeist sowie schon vorhandenen Dichtung integriert werden. Eine derartige Dichtung wird im Gegensatz zu einer normalen, passiven Dichtung 8 im folgenden aktive Dichtung 1 genannt.

Einige Möglichkeiten zur Ausbildung von derartig aktiven Dichtungen 1 sind in den Figuren 2 bis 4 dargestellt.

Figur 2 zeigt eine Dichtung 1 mit einer Matrix 6 aus vorzugsweise elektrisch leitendem Kunststoff, in den mehrere Piezoelemente 4 in beliebiger Größe, Orientierung und körperlicher Gestaltung eingebettet sind. Eine derartige Anordnung wird i.a. als 0-3-Piezokeramik-Polymer-Komposit bezeichnet. Im Bereich der Wandungen sind günstigerweise elektrische Kontakte 5 angeordnet, die durch elektrische Steuerleitungen 10 mit einer Steuereinheit (nicht dargestellt) verbunden sind.

Durch die elektrischen Kontakte 5 können die einzelnen Piezoelemente 4 zum einen gezielt angesteuert werden und zum anderen ist es möglich, eine elektrische Spannung abzugreifen, die z.B. dadurch entstehen kann, das übertragenen Schwingungen einen Drucks auf die Piezoelemente 4 ausüben und diese deformieren.

In einem einfachen Fall kann bei einer Dichtung 1 auch auf die elektrischen Kontakte 5 verzichtet werden. In diesem Fall führt eine auf übertragene Schwingungen zurückgehende Deformation der Piezoelemente 4 zu einer elektrischen Spannung. Die elektrische Spannung wird hier in eine Erwärmung der Dichtung 1 umgesetzt, womit das System ebenfalls gedämpft ist.

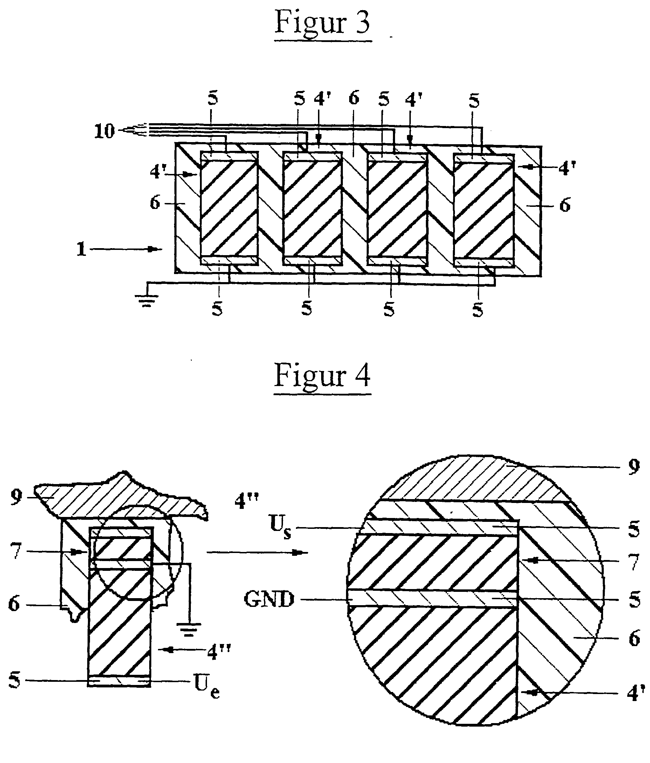

In Figur 3 ist eine aktive Dichtung 1 mit einer Kunststoff-Matrix 6 dargestellt, in der mehrere Piezoelemente 4 eingebettet sind. Im Gegensatz zu dem Ausführungsbeispiel nach Figur 2 sind diese Piezoelemente von bestimmter Größe und Form und zusätzlich orientiert angeordnet. Eine derartige Anordnung wird i.a. als 1-3-Piezokeramik-Polymer-Komposit bezeichnet.

Im Bereich der Wandungen der Dichtung 1 sind ebenfalls elektrische Kontakte 5 angeordnet, die gleichfalls durch elektrische Steuerleitungen 10 mit einer Steuereinheit (nicht dargestellt) verbunden sind. Im Unterschied zu der Dichtung nach Figur 2 ist bei der Dichtung nach Figur 3 ein jedes einzelne Piezoelement 4' elektrisch kontaktiert und somit auch getrennt einzeln ansteuerbar.

Über die elektrischen Kontakte 5 können die einzelnen Piezoelemente 4 gezielt zu Sekundär-Schwingungen mit gewünschten Frequenzen und Amplituden erregt werden. Die Sekundär-Schwingungen können mit den übertragenen Schwingungen interferiert und/oder diesen überlagert werden. Im Falle einer negativen Interferenz können die zuvor ohne diese Beeinflussung wahrgenommenen Geräusche zumindest verringert werden, während bei einer Überlagerung bspw. eine gewünschte Beschallung mit Musik oder einer gesprochenen Nachricht möglich ist.

Die Piezoelemente 4' der Dichtung 1 sind vorzugsweise in der Art von Piezostaks ausgebildet und/oder lamellenartig und insbesondere flüchtend hinter- oder übereinander in der Dichtung 1 angeordnet.

Bei der Herstellung der Dichtung 1 werden die so angeordneten Piezoelemente 4' sinnvollerweise vor dem Einlassen in den die Matrix 6 der Dichtung bildenden Kunststoff noch elektrisch kontaktiert. Damit die Dichtung 1 auch weiterhin ihren üblichen Zweck erfüllt, ist der die Matrix 6 bildende Kunststoff bevorzugt aus einem Polymer und insbesondere aus einem Elastomer gefertigt.

In Figur 4 ist eine aktive Dichtung 1 mit einer Kunststoff-Matrix 6 dargestellt, in der mehrere Piezoelemente 4'' mit zugeordneten piezoelektrischen Sensoren 7 eingebettet sind. Die Piezoelemente 4'' gleichen weitgehend denen nach Figur 3.

Allerdings ist ihnen in Richtung ihrer aktiven Achse ein vorzugsweise piezoelektrischer Sensor 7 nachgeordnet. Der Sensor 7 weist einen gemeinsamen und einen zusätzlichen elektrischen Kontakt 5 auf. Der gemeinsame Kontakt 5, der zwischen dem Piezoelement 4'' und dem Sensor 7 angeordnet ist, ist zweckmäßigerweise geerdet bzw. auf ein elektrisches Null-Potential gelegt.

Über die elektrischen Kontakte 5 können die einzelnen Piezoelemente 4'' gezielt zu Sekundär-Schwingungen mit gewünschten Frequenzen und Amplituden erregt werden. Die Sekundär-Schwingungen können mit den übertragenen Schwingungen interferiert und/oder diesen überlagert werden. Im Falle einer negativen Interferenz können die zuvor ohne diese Beeinflussung wahrgenommenen Geräusche zumindest verringert werden, während bei einer Überlagerung bspw. eine gewünschte Beschallung mit Musik oder einer gesprochenen Nachricht möglich ist.

In vorteilhafter Weise kann bei einer derartigen Dichtung 1 mit dem Sensor 7 eine nach gewünschter Anregung der Piezoelemente 4'' verbleibende Restschwingung ermittelt und entsprechend gesteuert werden. Mit der zugehörigen Elektronik bildet dieses Piezo-/Sensorelement 4'' also einen Regelkreis aus. Aus diesem Grund ist es u.a. günstig, den Sensor 7 in Kraftflußrichtung und/oder parallel zu der Auslenkungsrichtung der zu erwartenden Amplitude der übertragenen Schwingung nach dem erregbaren Piezoelement 4'' anzuordnen.

Durch die einzelne elektrische Kontaktierung eines jeden Sensors 7 und der jeweiligen Piezoelemente 4'' kann die Ermittlung der Restschwingung und die Einleitung der Sekundär-Schwingung mit einer guten Auflösung und Flexibilität erfolgen.

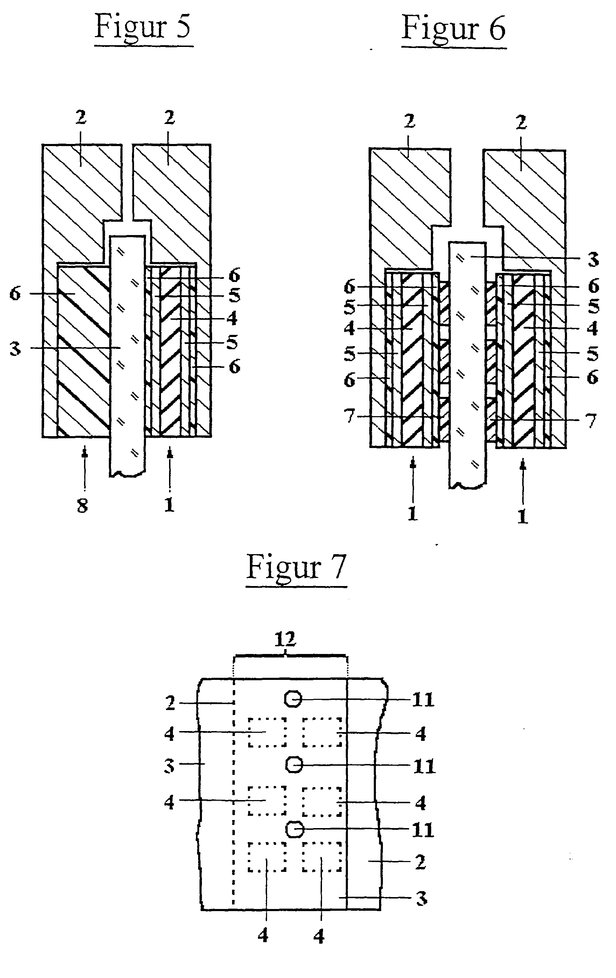

Mögliche Anordnungen der in den vorhergegangenen Figuren beschriebenen aktiven Dichtungen 1 sind in den Figuren 5 und 6 dargestellt, wobei bei allen diesen Ausführungsbeispielen das erste Bauteil 3 an seinem Randbereich auf seinen beiden Flachseiten von dem zweiten Bauteil 2 rahmensartig umfaßt ist.

Figur 5 zeigt einen quer zur Fläche des ersten Bauteils 3 geführten Schnitt durch eine Anordnung gemäß Figur 1. Das zweite Bauteil 2 ist im Bereich seiner Überlappung mit dem ersten Bauteil 3 zweiteilig ausgeführt, damit das erste Bauteil 3 randseitig auf seinen beiden Flachseiten umfaßt ist. Im Bereich der Überlappung ist links eine passive Dichtung 8 und rechts eine aktive Dichtung 1 angeordnet. Die passive Dichtung 8 ist von herkömmlicher Bauart, während die aktive Dichtung eine der in den Figuren 2 bis 4 dargestellten Bauweisen aufweisen kann. Am vielseitigsten verwendbar ist hier insbesondere die in Figur 4 Art dargestellte einer aktiven Dichtung 1.

Der in Figur 6 dargestellte Schnitt entspricht weitgehend demjenigen nach Figur 5, wobei hier allerdings auf beiden Flachseiten des ersten Bauteils 3 aktive Dichtungen 1 angeordnet sind. Zusätzlich sind bei diesem Ausführungsbeispiel auf noch zwischen jeder Flachseite des ersten Bauteils 3 und den Dichtungen 1 Sensoren 7 angeordnet.

In Figur 7 ist ein Ausschnitt eines Gegenstandes dargestellt, der ein erstes plattenartiges Bauteil 3 aufweist, das mit einem zweiten Bauteil 3 überlappend angeordnet ist. Im Anlagebereich 12, in dem sich die beiden Bauteile 2 und 3 überlappen, sind die beiden Bauteile 2 und 3 durch Befestigungen 11, wie Schrauben, Clipse, Schweißpunkte und dgl. miteinander verbunden.

Desweiteren ist im Anlagebereich 12 zwischen den beiden Bauteilen 2 und 3 eine aktive Dichtung 1 angeordnet. Bei einem derartigen Gegenstand kann es sich bspw. um zwei Karosseriebleche, aber auch um aneinander gestoßene Teile wie Motorblock und Zylinderkopf handeln.

Die Ausbildung der aktiven Dichtungen 1 entspricht denen nach den Figuren 2 bis 4, weshalb hier nicht noch einmal speziell auf diese eingegangen wird.

Wie schon anhand der obigen Vorrichtung nach Figur 1 beschrieben, ist auch die Vorrichtung nach Figur 7 zur Beeinflussung von Geräuschen geeignet. Bei den hier auftretenden Geräuschen kann es sich u.a. um Schwingungen handeln, die insbesondere bei einer Karosserie oder einem Maschinenteil über die Karosserie bzw. bspw. einer Ummantelung übertragen werden. Derartige Schwingungen können von einem Bauteil über den Anlagebereich 12 auf das in Ausbreitungsrichtung nachfolgende Bauteil übertragen werden und als vorzugsweise störende Geräusch wahrnehmbar sein. Vor allem bei Motor betriebenen Kraftfahrzeugen wie Flugzeugen, Bahnen und Bussen sowie insbesondere bei Lastkraft- und/oder Personenkraftwagen können diese Geräusche vom Motor stammen und für die im Innenraum wahrnehmbare Geräuschkulisse von besonderem Interesse sein. Gleiches gilt für die Schallabstrahlung nach außen.

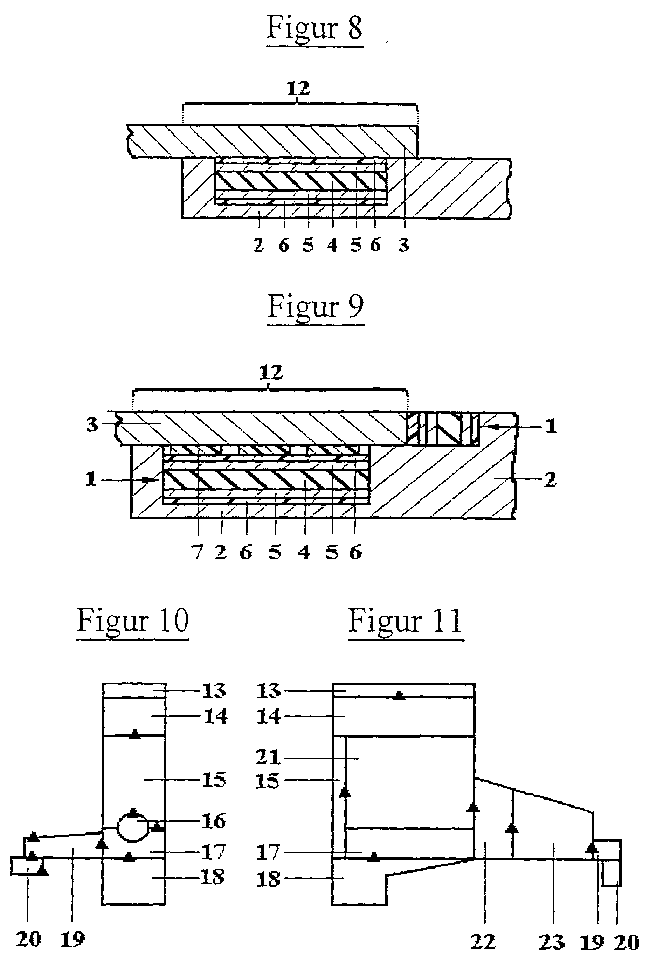

Mögliche Anordnungen der in den Figuren 2 bis 4 beschriebenen aktiven Dichtungen 1 bei überlappenden Bauteilen sind in den Figuren 8 und 9 dargestellt.

Figur 8 zeigt einen quer zur Fläche des ersten Bauteils 3 geführten Schnitt durch eine Anordnung gemäß Figur 7. Das zweite Bauteil 2 weist im Anlagebereich eine Vertiefung auf, in der eine aktive Dichtung 1 insbesondere orts- und/oder lagedefiniert angeordnet ist. Hierbei sind die Piezoelemente der Dichtung 1 insbesondere dort angeordnet, an denen mit den höchsten Amplituden bzw. höchsten Modendichte und/oder den stärksten Druckveränderung und damit im Bereich der höchsten Kraftflüsse der übertragenen Schwingungen zu rechnen ist.

Der in Figur 9 dargestellte Schnitt entspricht weitgehend demjenigen nach Figur 8, wobei hier allerdings zusätzlich noch zwischen der Flachseite des ersten Bauteils 3 und der Dichtung 1 Sensoren 7 angeordnet sind.

Insgesamt kann bei der Erfindung durch den Einsatz der Piezoelemente 4, 4' und 4'' die Übertragungsfunktion zwischen dem zweiten Bauteil 2 und dem ersten Bauteil 3 sowie umgekehrt verändert werden. Bei der Verwendung geregelt steuerbarer Piezoelemente bzw. aktiver Dichtungen 1 mit derartigen Piezoelementen kann dies in vorteilhafter Weise sogar variabel und reversibel erfolgen, so daß die Möglichkeiten zur Beeinflussung und hierbei insbesondere zur Verstimmung verbessert sind.

In Figur 10 ist eine schematische Darstellung einer Frontansicht eines Reihenmotors mit Getriebe und möglichen Positionen zur Anordnung von insbesondere aktiven Dichtungen 1 dargestellt. Figur 11 zeigt den entsprechenden Motor in Seitenansicht. Der Reihenmotor gemäß den Figuren 10 und 11 weist einen Ventildeckel 13, einen Zylinderkopf 14, einen das Kurbelgehäuse bildenden Zylinderblock 15 mit zugehörigem Kurbelwellengehäuse 17, eine im Kurbelgehäuse angeordnete Kurbelwelle 16, eine Ölwanne 18, eine Abdeckung 21, einen Motorträger 19, ein Motorlager 20, ein Kupplungs- bzw. Automatikgehäuse 22 und ein Getriebegehäuse 23 auf.

Die möglichen Anordnungen von aktiven Dichtungen 1 sind mit Dreiecken angedeutet. Sie befinden sich hauptsächlich zwischen zwei der oben genannten Komponenten. Insbesondere ist eine entsprechende Anordnung eines Piezoelements auch an der Kurbelwelle 17 von Vorteil, da hier dann gezielt am Ort einer Entstehung einer übertragenen Schwingung eingegriffen werden kann.

Von besonderem Vorteil ist hier die unterschiedliche akustische Impedanz der beiden Bauteile zu werten, da das härtere bzw. steifere Bauteil für die Piezoelemente 4, 4', 4'' in der Art einer scheinbar festen Auflage einen scheinbaren Fixpunkt darstellt - also sich darauf quasi abstützen kann - , wodurch das weichere Bauteil in einfacher und energiesparender Weise zu künstlichen Schwingungen erregt werden kann.

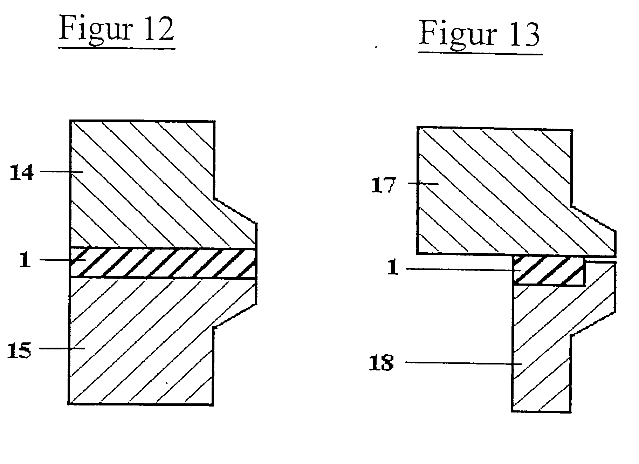

Dieser Umstand ist insbesondere anhand der beiden Figuren 12 und 13 zu erkennen. So ist in Figur 12 eine aktive Dichtung 1 im Stoßbereich zwischen Zylinderkopf 14 und Zylinderblock 15 und in Figur 13 eine aktive Dichtung 1 zwischen Kurbelwellengehäuse 17 und Ölwanne 18 dargestellt. Die aktive Dichtung 1 ist in beiden Fällen im Stoßbereich zwischen den beiden jeweiligen Bauteilen angeordnet.

Wird hierbei der Zylinderblock 15 bzw. das Kurbelwellengehäuse 17 mit einer hohen akustischen Impedanz, also akustisch hart oder steif bzw. möglichst starr konstruiert, kann das korrespondierende Bauteil einfach und akustisch weich ausgeführt sein, da es durch die jeweilige aktive Dichtung 1 in einfacher Weise zu Gegenschwingungen erregt werden kann, die der übertragenen Schwingung entgegenwirken.

Dies ist aber hinsichtlich der Konstruktion von derartigen Bauteilen ein technische Lehre, die der bislang herrschenden Lehre vollkommen entgegensteht. Diese besagt nämlich, daß bei derartigen Bauteilen beide Bauteile möglichst akustisch hart ausgeführt werden müssen, damit eine übertragene Schwingung auf das nachfolgende Bauteil eine möglichst geringe Erregung bewirkt.

Im folgenden wird das erfindungsgemäße Verfahren anhand von zwei Beispielen beschrieben. In beiden Fällen handelt es sich bei dem ersten Bauteil 3 um ein Karosserieblech einer Kraftfahrzeugkarosse, das von Luft umströmt wird. Bei dem zweiten Bauteil 2 kann es sich um ein Rahmenteil der Karosserie oder um ebenfalls um ein Karosserieblech handeln, durch das Schwingungen auf das erste Bauteil 3 übertragen werden. Beide Anregungen des ersten Bauteils 3 (strömende Luft und von der Karosserie übertragene Schwingungen) bilden einen Teil der im Innenraum des Kraftfahrzeugs, insbesondere eines Automobils, eines Flugzeugs oder eines Zugwagons wahrnehmbaren und bei niederen Frequenzen sogar spürbaren Geräuschkulisse.

### Beispiel 1

Bei einer Vorrichtung gemäß Beispiel 1 weist das erste Bauteil 3 beidseitig eine Dichtung ähnlich der in Figur 2 dargestellten Dichtung 1 auf, wobei in dieser Dichtung 1 keine elektrischen Kontakte 5 für die Piezoelemente 4 angeordnet sind.

Durch turbulent strömende Luft bilden sich Druckschwankungen entlang der außenliegenden Flachseite des ersten Bauteils 3 aus, die das erste Bauteil 3 zu Schwingungen erregen. Diese Schwingungen bewirken im Bereich des zweiten Bauteils 2 sich verändernde Druckverläufe bzw. Kraftflüsse in der Dichtung 1. Die sich verändernden Druckverläufe bzw. Kraftflüsse bilden denjenigen Teil der übertragenen Schwingungen, deren Anregung von außen kommt. Ein anderer Teil der übertragenen Schwingung wird von der Karosserie über das zweite Bauteil 2 auf das erste Bauteil 3 übertragen. Auch diese übertragenen Schwingungen bewirken im Bereich des zweiten Bauteils 2 sich verändernde Druckverläufe bzw. Kraftflüsse in der Dichtung 1.

Durch diese Druckschwankungen bzw. Kraftflüsse wird das Kristallgitter der in der Dichtung 1 angeordneten Piezoelemente 4 entgegen ihrer Ruheladung verändert. Die Veränderung aus der Ruhelage ist mit einer Energieaufnahme verbunden, welche Energie der übertragenen Schwingung entzogen und in elektrische Energie umgewandelt wird. Diese Energie wird anschließend in der Form vom Wärme an den Kunststoff der Matrix 6 der Dichtung 1 weitergegeben. Insgesamt ist durch diesen Vorgang die Gesamtenergie und/oder die Zusammensetzung der Frequenzen der über den Fensterrahmen 2 und/oder über die Fensterscheibe 3 übertragenen Schwingungen verringert. Die Verringerung der Gesamtenergie der übertragenen Schwingung stellt eine Dämpfung dar und bewirkt eine Verringerung der von dem ersten Bauteil 3 kommenden wahrnehmbaren Geräusche.

### Beispiel 2

Bei einer Vorrichtung gemäß Beispiel 2 ist zwischen dem ersten Bauteil 3 und dem zweiten Bauteil 2 eine aktive Dichtung 1 angeordnet, die derjenigen nach Figur 4 entspricht.

Wie schon bei Beispiel 1 wird durch Druckschwankungen bzw. Kraftflüsse das Kristallgitter der in der Dichtung 1 angeordneten Piezoelemente 4 entgegen ihrer Ruheladung bzw. Ruhelage verändert.

Gleichfalls wird die so übertragenen Schwingung von den Sensoren 7 aufgenommen. Durch eine nicht dargestellte, aber hinreichend bekannte Auswerteelektronik und die bekannten mathematischen Algorithmen (Fourier-Transformation usw.) kann die Zusammensetzung der übertragenen Schwingung hinsichtlich ihrer Frequenzen und ihrer dazugehörigen Amplituden ermittelt werden.

Aufgrund der ermittelten Werte für die übertragene Schwingung werden nun Daten generiert, mit denen die Piezoelemente der aktiven Dichtung 1 angesteuert und zu einer Sekundär-Schwingung erregt werden. Bei der Sekundär-Schwingung können alle vorliegenden Frequenzen aber auch nur diskrete Frequenzen berücksichtigt werden. Bei der Beschränkung auf diskrete Frequenzen sind der bauliche und der logistische Aufwand und damit auch die Kosten für eine erfindungsgemäße Vorrichtung und ein erfindungsgemäßes Verfahren gesenkt.

Die künstlich erzeugte Sekundär-Schwingung wird mit der übertragenen Schwingung interferiert. Die Gesamtenergie der nach der Interferenz verbleibenden Restschwingung ist zumindest geringer als die Gesamtenergie der ursprünglich vorliegenden übertragenen Schwingung. Die Verringerung der Gesamtenergie der übertragenen Schwingung stellt eine Dämpfung dar und bewirkt eine Verringerung der von der Fensterscheibe 3 kommenden wahrnehmbaren Geräusche. Die verbleibende Restschwingung kann ebenfalls durch die Sensoren 7 gemessen werden. Hierbei kann insbesondere wie schon zuvor bei der übertragenen Schwingung die Restschwingung entsprechend beeinflußt werden. Es handelt sich also insgesamt um eine Regelstrecke.

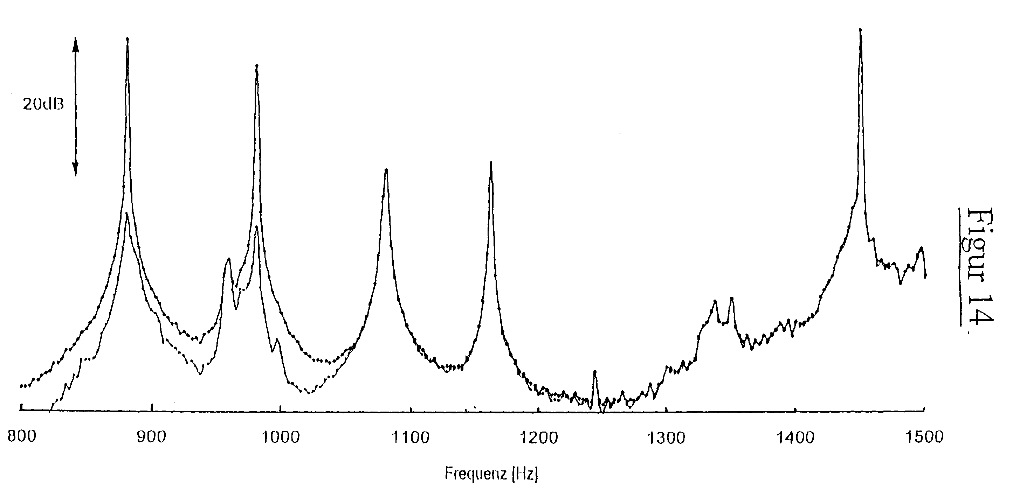

Das Resultat einer Beeinflussung einer Anordnung gemäß Beispiel 2 ist in Figur 14 dargestellt. Figur 14 zeigt ein Diagramm eines Luftschallpegels einer Ölwanne 18 mit und ohne erfindungsgemäßem Verfahren. Das unbeeinflußte Resultat wird durch die obere Kurve, das Resultat mit erfindungsgemäßer Beeinflussung durch die untere Kurve repräsentiert.

Das Diagramm zeigt den sogenannten 1kHz-Oktavpegel und wurde zwischen 800 Hz und 1500 Hz aufgenommen. Der Mikrophonabstand betrug 1 m und die Piezoelemente wurden auf die beiden höchsten Amplituden der übertragenen Schwingung von 880 Hz und 980 Hz abgestimmt. Allerdings wurde die örtlich Anordnung der Piezoelemente im Stoß zwischen den beiden Bauteilen nicht optimiert.

Wie anhand eines Vergleich der oberen Kurve der unteren Kurve zu sehen ist, betrug die Verminderung insbesondere der 880 Hz Amplitude 20 dB; diejenige bei 980 Hz ist nicht wesentlich geringer. Bei ausgeschalteten Piezoelementen betrug der Luftschallpegel 80 dB(A) und der 1kHz-Schallpegel 77 dB(A). Mit erfindungsgemäßer Beeinflussung, also mit aktivierten und zu Sekundär-Schwingungen erregten Piezoelementen betrug der Luftschallpegel 78 dB(A) und der 1kHz-Schallpegel 72 dB(A). Dies bedeutet allein schon bei nicht optimierter Anordnung der Piezoelemente eine Verringerung der wahrnehmbaren Geräuschkulisse bzgl. des Luftschallpegels von 2 dB(A) und und bzgl. des 1kHz-Schallpegels von 6 dB(A).

Durch eine 'in situ' - Ermittlung der real vorliegenden übertragenen Schwingung kann die Sekundär-Schwingung immer in Abhängigkeit zu der übertragenen Schwingung verändert wird.

Anstelle der Ermittlung der real vorliegenden übertragenen Schwingung kann zur Erzeugung der Sekundär-Schwingungen stellvertretend auch eine exemplarisch ermittelte übertragene Schwingung, die bei Motor betriebenen Kraftfahrzeugen und hierbei insbesondere von Kraftwagen vorzugsweise von einem Parameter wie der Drehzahl, dem Kurbelwellenwinkel und/oder der Last usw. herangezogen werden.

In diesem Fall werden dann die zur Erzeugung der Sekundär-Schwingung benötigten Daten günstigerweise einem Datenspeicher entnommen, in dem sie niedergelegt sind. In besonderer Weise kann dieser Datensatz gezielt verändert werden. Dazu muß das entsprechende System als lernfähiges System ausgebildet sein.

Sinnvollerweise wird im Fall einer aktiven und Kontakte 5 aufweisenden Dichtung 1 die Dichtung 1 vorzugsweise baulich ausgerichtet, bspw. unter Zuhilfenahme einer Nut angeordnet. Die gezielte Ausrichtung der Dichtung 1 dient dazu, daß die aktive Achse der Piezoelemente 4', 4'' zumindest in etwa in Richtung der höchsten Amplitude und/oder in Kraftflußrichtung weist.

Desweiteren kann durch eine entsprechende körperliche Gestaltung der Dichtung 1 und der Aufnahme der Dichtung auch der Ort eines Piezoelementes 4', 4'' relativ zu seinem Einbauort festgelegt werden.

Ein besonderer Vorteil der Erfindung ist bei den ansteuerbaren Piezoelementen 4' und 4'' - insbesondere bei in den aktiven Dichtungen 1 angeordneten Piezoelementen 4' und 4'' - noch darin zu sehen, daß durch die Anordnung der Piezoelemente im Randbereich des Fensters und im Bereich des Überganges zwischen der Fensterscheibe 3 und dem Fensterrahmen 2 zur Beeinflussung der Geräuschkulisse nur kleine Hübe notwendig sind. Dies gilt sowohl bei der Erzeugung und/oder Erhöhung eines bestimmten Geräuscheindrucks als auch bei der Verminderung und/oder Unterdrückung bestimmter Geräusche.

Ferner ist aufgrund der kleinen Hübe und des geringen Verluststromes bei Piezoelementen der Energiebedarf bei dieser Einflußnahme günstigerweise gering.

## Patentansprüche

1. Verfahren zur Beeinflussung von Schwingungen, die von einem zumindest mittelbar motorisch angetriebenen Fahrzeug ausgehen, insbesondere von einer im Fahrgastraum wahrnehmbaren Geräuschkulisse,
**dadurch gekennzeichnet,**
daß im Bereich eines Übergangs zweier sich zumindest mittelbar und wenigstens bereichsweise berührender, insbesondere überlappender Bauteile (2, 3) - im folgenden vereinfachend Anlagebereich (12) genannt - zumindest ein ein Piezoelement (4, 4', 4'') angeordnet, insbesondere zwischengelegt wird, daß über den Anlagebereich (12) Schwingungen zwischen dem ersten Bauteil (3) und dem zweiten Bauteil (2) übertragen werden und daß mit dem Schwingungserreger die Gesamtenergie und/oder die Zusammensetzung der Frequenzen der über den Anlagebereich (12) und/oder über die Fläche eines Bauteils (2 oder 3) übertragenen Schwingungen verändert wird.

2. Verfahren nach Anspruch 1,
**dadurch gekennzeichnet,**
daß mit dem Piezoelement (4, 4', 4'') der Gesamtenergie der übertragenen Schwingungen Energie entzogen wird.

3. Verfahren nach Anspruch 1,
**dadurch gekennzeichnet,**
daß mit dem Piezoelement (4, 4', 4'') wenigstens eine Amplitude zumindest einer Frequenzen der übertragenen Schwingungen verändert, insbesondere verringert wird.

4. Verfahren nach Anspruch 1,
**dadurch gekennzeichnet,**
daß das Piezoelement (4, 4', 4'') von der Gesamtenergie der übertragenen Schwingungen angeregt wird.

5. Verfahren nach Anspruch 1,
**dadurch gekennzeichnet,**
daß das Piezoelement (4, 4', 4'') die übertragene Gesamtenergie der Schwingungen zumindest teilweise zuerst in eine elektrische Spannung und anschließend in Wärme umwandelt.

6. Verfahren zur Beeinflussung von wahrnehmbaren Schwingungen, die von einem zumindest mittelbar motorisch angetriebenen Fahrzeug ausgehen, insbesondere von einer im Fahrgastraum wahrnehmbaren Geräuschkulisse,
**dadurch gekennzeichnet,**
daß im Bereich eines Übergangs zweier sich zumindest mittelbar und wenigstens bereichsweise berührender, insbesondere überlappender Bauteile (2, 3) - im folgenden vereinfachend Anlagebereich (12) genannt - zumindest ein in seiner Geometrie steuerbar veränderbarer und zu Schwingungen erregbarer Distanzkörper, insbesondere ein Piezoelement (4, 4', 4''), zwischengelegt wird, daß über den Anlagebereich (12) Schwingungen zwischen dem ersten Bauteil (3) und dem zweiten Bauteil (2) übertragen werden, daß das Piezoelement zu einer Sekundär-Schwingung angeregt wird, daß die Sekundär-Schwingung mit der übertragenen Schwingung interferiert wird und daß mit dem Piezoelement (4, 4', 4'') die Gesamtenergie und/oder die Zusammensetzung der Frequenzen der über den Anlagebereich (12) und/oder über die Fläche eines Bauteils (2 oder 3) übertragenen Schwingungen verändert wird.

7. Verfahren nach Anspruch 6,
**dadurch gekennzeichnet,**
daß die Sekundär-Schwingung in Abhängigkeit zu den übertragenen Schwingung verändert wird.

8. Verfahren nach Anspruch 7,
**dadurch gekennzeichnet,**
daß die Sekundär-Schwingung in Abhängigkeit eines Parameters, insbesondere der Drehzahl und/oder dem Kurbelwellenwinkel eines Verbrennungsmotors verändert wird.

9. Verfahren nach Anspruch 7 oder 8,
**dadurch gekennzeichnet,**
daß die Daten zur Steuerung der Sekundär-Schwingung einem Datensatz entnommen werden.

10. Verfahren nach Anspruch 1 oder 6,
**dadurch gekennzeichnet,**
daß der Distanzkörper - im folgenden nur noch Piezoelement (4, 4', 4'') genannt - in einer Dichtung (aktive Dichtung 1) angeordnet wird.

11. Verfahren nach Anspruch 1 oder 6,
**dadurch gekennzeichnet,**
daß das Piezoelement (4, 4', 4'') im Bereich einer Amplitude bzw. einer hohen Modendichte und/oder im Bereich eines hohen Anpreßdruckes der übertragenen Schwingung angeordnet wird.

12. Verfahren nach Anspruch 1 oder 6,
**dadurch gekennzeichnet,**
daß mit dem Piezoelement (4, 4', 4'') die zwischen den Bauteilen (2, 3) vorliegende Übertragungsfunktion für die übertragenen Schwingungen verändert wird.

13. Verfahren nach Anspruch 1 oder 6,
**dadurch gekennzeichnet,**
daß die miteinander verbundenen Bauteile (2, 3) bzgl. der Leitung des Körperschalls mit einer unterschiedlichen akustischen Impedanzen dimensioniert werden.

14. Verfahren nach Anspruch 1 oder 6,
**dadurch gekennzeichnet,**
daß mit dem Piezoelement (4, 4', 4'') im Bereich hoher Modendichten des Körperschalls Sekundär-Schwingungen eingeleitet werden.

15. Verfahren nach Anspruch 1 oder 6,
**dadurch gekennzeichnet,**
daß das Verhältnis der akustischen Impedanz der beiden aneinander anliegenden Bauteile (2, 3) kleiner als 1: 2, bevorzugt kleiner als 1: 5 und besonders bevorzugt kleiner als 1 : 10 gewählt wird.

16. Verfahren nach Anspruch 1 oder 6,
**dadurch gekennzeichnet,**
daß als Anlagebereich (12) ein Stoß oder ein Flansch oder eine Trennfuge gewählt wird.

17. Verfahren nach Anspruch 1 oder 6,
**dadurch gekennzeichnet,**
daß als Bauteil (2, 3) eine Paneele, eine Verschalungsplatte, ein Fensterglas, ein Verkleidungsteil, insbesondere ein Karosserieblech eines Kraftfahrzeuges oder eines Flugzeuges gewählt wird.

18. Verfahren nach Anspruch 6,
**dadurch gekennzeichnet,**
daß ein Distanzkörper aus einem shape-memory-Metall gewählt wird.

19. Vorrichtung zur Beeinflussung von wahrnehmbaren Schwingungen, die von einem zumindest mittelbar motorisch angetriebenen Fahrzeug ausgehen, insbesondere von einer im Fahrgastraum wahrnehmbaren Geräuschkulisse,
**dadurch gekennzeichnet,**
daß im Bereich eines Übergangs zweier sich zumindest mittelbar und wenigstens bereichsweise überlappender Bauteile (2, 3) zumindest ein zu Schwingungen erregbarer Distanzkörper, insbesondere ein Piezoelement (4, 4', 4''), angeordnet ist.

20. Vorrichtung nach Anspruch 19,
**dadurch gekennzeichnet,**
daß der Distanzkörper, im folgenden nur noch Piezoelement (4, 4', 4'') genannt, mit einer Steuereinheit verbunden ist und daß das Piezoelement (4, 4', 4'') mit der Steuereinheit zu Sekundär-Schwingung erregbar ist.

21. Vorrichtung nach Anspruch 19,
**dadurch gekennzeichnet,**
daß die Vorrichtung einen Datenspeicher aufweist und daß die Daten zur Steuerung der Sekundär-Schwingung einem im Datenspeicher niedergelegten Datensatz entnehmbar sind.

22. Vorrichtung nach Anspruch 19,
**dadurch gekennzeichnet,**
daß ein Piezoelement (4, 4', 4'') im Bereich einer Amplitude bzw. hoher Modendichten der übertragenen Schwingung angeordnet ist.

23. Vorrichtung nach Anspruch 19,
**dadurch gekennzeichnet,**
daß mehrere Piezoelemente (4, 4', 4'') in einer Dichtung (aktive Dichtung 1) angeordnet sind.

24. Vorrichtung nach Anspruch 23,
**dadurch gekennzeichnet,**
daß die Dichtung (1) elektrisch kontaktiert ist und daß die Kontakte (5) im Wandungsbereich der Dichtung (1) angeordnet sind.

25. Vorrichtung nach Anspruch 23,
**dadurch gekennzeichnet,**
daß die Dichtung (1) eine Matrix (6) aus Kunststoff, bevorzugt einem Polymer und besonders bevorzugt aus einem Elastomer aufweist.

26. Vorrichtung nach Anspruch 23,
**dadurch gekennzeichnet,**
daß die Piezoelemente (4) in der Dichtung (1) vereinzelt und beliebig verteilt angeordnet sind - im folgenden 0-3-Piezokeramik-Polymer-Komposit genannt -.

27. Vorrichtung nach Anspruch 23,
**dadurch gekennzeichnet,**
daß die Piezoelemente (4', 4'') in der Dichtung (1) vereinzelt und ausgerichtet angeordnet sowie elektrisch kontaktiert sind - im folgenden 1-3-Piezokeramik-Polymer-Komposit genannt -.

28. Vorrichtung nach Anspruch 23,
**dadurch gekennzeichnet,**
daß die aktiven Achse der Piezoelemente (4', 4'') in etwa parallel zu der Auslenkungsrichtung der zu erwartenden Amplitude der übertragenen Schwingung ausgerichtet sind.

29. Vorrichtung nach Anspruch 23,
**dadurch gekennzeichnet,**
daß ein Piezoelement (4', 4'') mit seiner aktiven Achse in etwa parallel zu der von der übertragenen Schwingung eingeleiteten Kraft - im folgenden vereinfachend Kraftflußrichtung genannt - ausgerichtet ist.

30. Vorrichtung nach Anspruch 23,
**dadurch gekennzeichnet,**
daß in der Dichtung (1) Sensoren (7) für die Sekundär- und/oder übertragenen Schwingungen angeordnet sind.

31. Vorrichtung nach Anspruch 23,
**dadurch gekennzeichnet,**
daß die Piezoelemente (4'') in zwei Sektoren unterteilt sind, wobei der eine Sektor ein Piezoaktor und der andere Sektor der Sensor (7) ist.

32. Vorrichtung nach Anspruch 19,
**dadurch gekennzeichnet,**
daß die miteinander verbundenen Bauteile (2, 3) bzgl. der Leitung des Körperschalls unterschiedliche akustische Impedanzen aufweisen.

33. Vorrichtung nach Anspruch 32,
**dadurch gekennzeichnet,**
daß ein Verhältnis der akustischen Impedanz der beiden aneinander anliegenden Bauteile (2, 3) kleiner als 1: 2, bevorzugt kleiner als 1: 5 und besonders bevorzugt kleiner als 1 : 10 ist.

34. Vorrichtung nach Anspruch 19,
**dadurch gekennzeichnet,**
daß zumindest eines der Bauteile Blech und/oder Guß und/oder Glas und/oder faserverstärkten Kunststoff und/oder Kunststoff aufweist.

35. Vorrichtung nach Anspruch 19,
**dadurch gekennzeichnet,**
daß das eine Bauteil ein gerahmtes Fenster mit eine normalen oder Kunststoffglas ist und daß das Piezoelement (4, 4', 4'') zwischen dem Fensterrahmen (erstes Bauteil 3) und dem Fensterglas (zweites Bauteil 2) des Fensters angeordnet ist.

36. Vorrichtung nach Anspruch 19,
**dadurch gekennzeichnet,**
daß ein Bauteil ein Ventildeckel (13) und/oder ein Zylinderkopf (14) und/oder ein Motor- bzw. Zylinderblock (15) und/oder ein Kurbelwellengehäuse (17) und/oder eine Kurbelwelle (16) und/oder eine Ölwanne (18) und/oder ein Motorträger (19) und/oder ein Motorlager (20) und/oder ein Kupplungs- bzw. Automatikgehäuse (22) und/oder ein Getriebegehäuse (23) eines Motors ist und daß das Piezoelement (4, 4', 4'') im Bereich einer Trennfuge des entsprechenden Bauteils angeordnet ist.

37. Vorrichtung nach Anspruch 19,
**dadurch gekennzeichnet,**
daß ein Bauteil ein Anbauteil eines Motors, insbesondere ein Saugrohr, ein Katalysator, ein Luftfilter oder dgl. oder ein Motoraggregat ist und daß das Piezoelement (4, 4', 4'') im Bereich der Befestigung des entsprechenden Bauteils angeordnet ist.

38. Vorrichtung nach Anspruch 19,
**dadurch gekennzeichnet,**
daß das eine Bauteil plattenförmig, insbesondere ein Verkleidungs- oder Verschalungselement ist.
